(19) Europäisches Patentamt
European Patent Office
Office européen des brevets

(11) Publication number: **0 012 183**
**B1**

# (12) EUROPEAN PATENT SPECIFICATION

(45) Date of publication of patent specification: **18.04.84**

(51) Int. Cl.³: **C 07 F 7/10**, C 07 F 7/08, C 07 F 5/02, A 61 K 31/695

(21) Application number: **79104096.7**

(22) Date of filing: **23.10.79**

## (54) 4,4 Dialkyl-4-sila-fatty acid amides, intermediates and process for their preparation and pharmaceutical compositions containing them.

(30) Priority: **25.10.78 US 954410**
**21.02.79 US 13457**
**14.02.79 US 12064**

(43) Date of publication of application:
**25.06.80 Bulletin 80/13**

(45) Publication of the grant of the patent:
**18.04.84 Bulletin 84/16**

(84) Designated Contracting States:
**AT BE CH DE FR GB IT LU NL SE**

(56) References cited:
EP - A - 0 008 130
EP - A - 0 013 818
DE - A - 2 737 026
US - A - 2 973 383
US - A - 3 651 115

(73) Proprietor: **SANDOZ AG**
**Lichtstrasse 35**
**CH-4002 Basel (CH)**

(72) Inventor: **Barcza, Sandor**
**8 Larchdell Way**
**Mountain Lakes, New Jersey 07046 (US)**

(56) References cited:
**Chemical Abstracts vol. 80, no. 19, 13 May 1974, Columbus, Ohio, USA, B.A. NIKONOW et al. "Use of gas chromatography to study the stability of the silicon-carbon bond toward sulfuric acid" page 351, column 2, abstract no. 107731t**

**Chemical Abstracts vol. 59, no. 2, 22 July 1963, Columbus, Ohio, USA, N.S. NAMETKIN et al. "Reactions of silanes with unsaturated compounds containing functional groups" columns 1675 to 1676**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 012 183 B1

# 4,4 Dialkyl-4-sila-fatty acid amides, intermediates and process for their preparation and pharmaceutical compositions containing them

The present invention provides compounds of formula I:

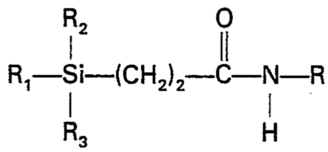

I

in which each of $R_1$, $R_2$ and $R_3$ is independently $(C_{1-22})$alkyl,
R is

a) an aralkyl radical of the formula

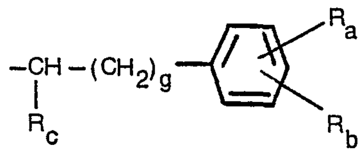

in which
g represents 0, 1 or 2,
$R_a$ is hydrogen, fluorine, chlorine, bromine or iodine, $(C_{1-4})$alkyl or alkoxy or trifluoromethyl,
$R_b$ is hydrogen, fluorine or chlorine, or $(C_{1-3})$alkyl or alkoxy,
$R_c$ is i) hydrogen
ii) a radical of the formula

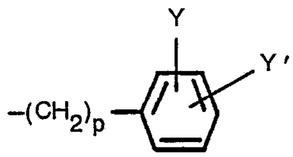

in which p is 0, 1 or 2, and
Y is hydrogen, fluorine, chlorine, bromine or iodine, or $(C_{1-4})$alkyl or alkoxy,
Y' is hydrogen, fluorine or chlorine or $(C_{1-3})$alkyl or alkoxy, or
iii) $(C_{1-8})$alkyl,

or R is

b) an indolyl radical of the formula

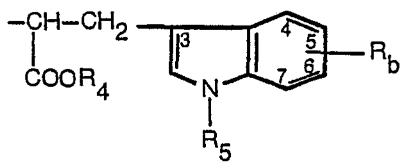

in which $R_b$ is as defined under a)
$R_4$ is $(C_{1-8})$alkyl or unsubstituted benzyl, and
$R_5$ is hydrogen, $(C_{1-8})$alkyl or unsubstituted benzyl,

or R is

c) a benzocycloalkyl radical of the formula

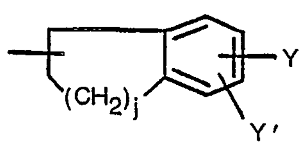

in which Y and Y' are as defined under a) and
j is from 1 to 4.

The preferred compounds of formula I are those of formula Ia,

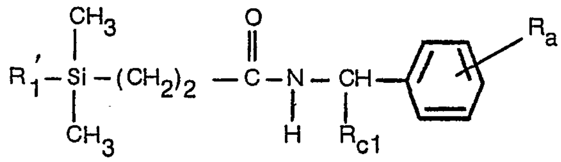

Ia

in which $R_1'$ is $C_{1-22}$alkyl, in which any branching is on other than the $\alpha$-carbon atom,
$R_a$ is as defined above, and
$R_{c1}$ is

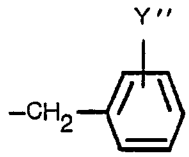

in which Y'' is fluorine, chlorine, bromine or iodine, or $(C_{1-4})$alkyl.

Especially preferred compounds of formula Ia are those in which
$R_1'$ is $(C_{5-22})$alkyl in which any branching is on other than the $\alpha$-carbon atom such as straight chain $(C_{5-22})$alkyl, particularly $(C_{8-18})$alkyl, especially $(C_{8-14})$alkyl, more especially $(C_{10}$-alkyl;
$R_a$ is hydrogen; and
Y'' is methyl.

A second group of compounds are those of formula Ib,

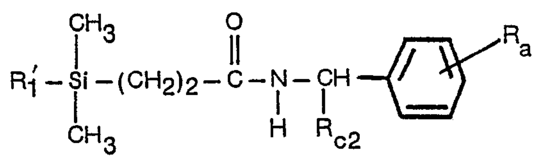

Ib

in which $R_1'$ and $R_a$ are as defined above, and
$R_{c2}$ is $(C_{1-4})$alkyl.

Especially preferred compounds Ib are those in which $R_1'$ is straight chain $(C_{8-18})$alkyl, particularly $(C_{10-18})$alkyl, and
$R_a$ is hydrogen.

$R_{c2}$ is preferably methyl.

If, in compounds of formula I, R is of type a), it is preferred that, when it contains mono-substituted phenyl, the substituent is located at the 4-position and that, when the phenyl is disubstituted, the substituents are the same and are preferably located at the 2- and 4-positions of the phenyl ring.

When R is of type a), where g = 1 and $R_c$ is type ii) where p = 0, then R can be an $\alpha$-(phenyl)-$\beta$-(*p*-methylphenyl)ethyl radical and when $R_c$ is of type ii) where p = 1, then R can be a $\alpha$-(benzyl)phenyl-ethyl radical.

When R is of type b), it is preferred that, when the phenyl ring is mono-substituted, the substituent be located at the 5-position of the indole nucleus. It is also preferred that when $R_4$ is alkyl, it is unbranched, particularly ethyl.

When R is of type c), it is preferred that when Y is other than a hydrogen atom, that it be located at a carbon atom ortho to the ring junction and that when Y' is also other than a hydrogen, it is preferred that it be the same as Y, and it is additionally preferred that it be in para position to Y.

It is additionally preferred that the amide group be linked to a carbon of the cycloalkyl moiety which is directly bonded to a ring junction carbon. It is also preferred that j be 1, i.e. that the benzocycloalkyl nucleus be indanyl and particularly 1-indanyl.

In the above-presented definitions, when $R_a$ or Y is halo, it is preferably fluorine or chlorine and particularly chlorine, and when Y' is halo, it is preferably chlorine.

The invention also provides a process for the preparation of the compounds of formula I, characterised by acylating a compound of formula III,

$$H_2N—R \qquad III$$

with a compound of formula IV,

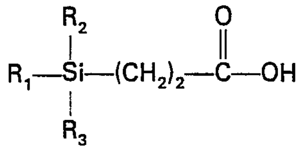

IV

or a reactive derivative thereof,
R, $R_1$, $R_2$ and $R_3$ being as defined above.

The reaction conditions for this type of acylation reaction are known per se. Suitable derivatives of compounds IV include acid chlorides, active esters, a carbodiimide adduct or mixed anhydrides.

The acylating agent is preferably of the formula

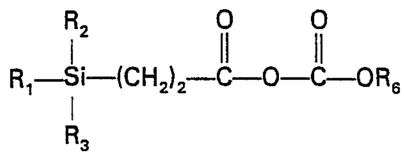

II

in which $R_6$ is $(C_{1-4})$alkyl and $R_1$, $R_2$, $R_3$ are as defined above.

This process may be carried out neat or in the presence of an inert organic solvent such as an ether, a halogenated hydrocarbon, e.g., methylene dichloride, chloroform, or an excess of a compound of the formula III. Methylene dichloride is preferred as a solvent. The temperature of the reaction is not critical, but is preferably from about −50° to +30°C., preferably from about −10° to +20°C. The reaction is suitably run from about 1 to 72 hours, preferably from about 4 to 16 hours. The resulting compounds I may be isolated and purified using conventional techniques.

The compounds of formula II may be prepared according to the following reaction scheme:

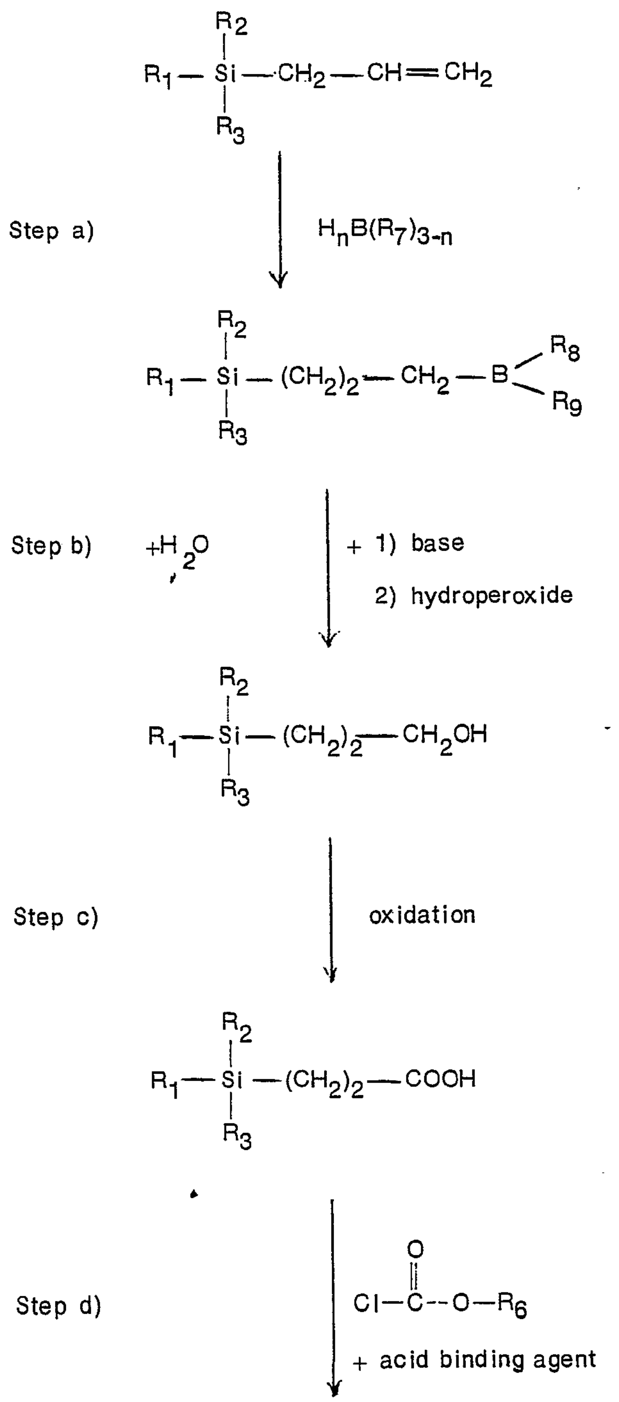


VIII

IX

VII

VI

IV

V

II

in which $R_1$, $R_2$, $R_3$ and $R_6$ are as defined above, B is boron, $R_8$ and $R_9$ each independently represent

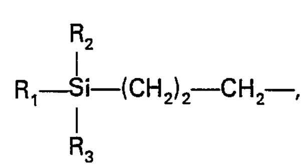

hydrogen or $(C_{1-8})$alkyl or $R_8$ and $R_9$ together are

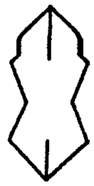

or

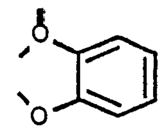

n is 1 to 3, and $(R_7)_{3-n}$ is $[(C_{1-8})alkyl]_{3-n}$ or, when n is 1, alternatively

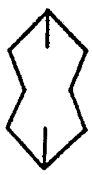

or

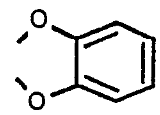

In reaction step d) preferred acid binding agents include pyridine, triethylamine and diisopropylamine, preferably triethylamine. Preferred solvents are aprotic solvents, such as the halogenated hydrocarbons, e.g. methylene dichloride, chloroform, or the aromatic hydrocarbons, e.g. benzene, toluene and acetonitrile. A preferred solvent is methylene dichloride. The reaction temperature is, e.g. from about −50° to +30°C, especially from −20° to +20°C. The reaction is run, e.g. from about 10 minutes to 18 hours, preferably from about 30 minutes to 3 hours. The product may be recovered by conventional techniques. However, the compounds of the formula II are suitably not isolated but used *in situ* in the preparation of the final compounds.

In step c) the compound of the formula VI is reacted with an oxidising agent such as potassium permanganate or, preferably, chromium trioxide, suitably under acidic conditions. Preferred acids include the mineral acids, such as phosphoric acid, acetic acid or especially sulfuric acid. A suitable solvent is acetone, especially acetone in combination with a small amount of water, although the combination of water and other inert solvents, such as diethylether, may also be employed. The temperature of the reaction is preferably from about −40° to +30°C, especially from −10° to +5°C. The reaction is run from, e.g. about 10 minutes to 6 hours, preferably from 2 to 3 hours.

In step b) compounds of formula VII are reacted with water, in a first step with an organic or inorganic base and in a second step with a hydroperoxide, e.g. a tertiary lower alkyl hydroperoxide or hydrogen hydroperoxide, preferably *t*-butyl hydroperoxide, in an inert organic solvent. Suitable bases include organic bases such as methyldiisopropylamine, pyridine or, preferably, triethylamine. Less preferred are the inorganic bases such as alkali metal hydroxides. The preferred solvents include dioxane, diethylether or preferably tetryhydrofuran. The temperature of the reaction is preferably from about −20° to +40°C, especially from 0° to 25°C. The reaction is run from e.g. about 3 to 24 hours, preferably from about 12 to 16 hours.

The reaction step a) may suitably be performed under an inert atmosphere, e.g. nitrogen, and in the presence of an aprotic solvent. The boron reagent IX contains at least one active hydrogen atom, and is e.g. $BH_3$ or an alkyl boron hydride, or other boron hydrides conventionally used for hydroboration, e.g. 9-borabicyclo[3.3.1]nonane of the formula

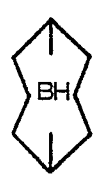

or catecol-borane of the structure

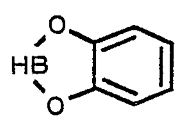

The agent is preferably used in the form of a tetrahydrofuran/borane reagent (1:1) e.g. ($BH_3$.THF). Preferred aprotic solvents are ethers such as diethylether or tetrahydrofuran, the latter being especially preferred. The temperature of the reaction is preferably from about −78° to +100°C, especially from about −10° to +30°C. The reaction is run from e.g. about 5 minutes to 12 hours, preferably from about 15 minutes to 1 hour. The product may be recovered using conventional techniques, however, it is preferred that compound VIII not be isolated but employed *in situ* in the preparation of compunds VI.

Many of the compounds VIII are known or may be prepared by conventional techniques, e.g. metal organic displacements of halogen on silicon.

The compounds of formula III, V and IX are either known or may be prepared in conventional manner from available materials. The compounds of formula IV, in which $R_1$ represents $(C_{8-18})$alkyl, are novel and also form part of the present invention.

Of more particular interest among said novel compounds are those in which any branching of $R_1$ is on other than the $\alpha$-carbon atom and especially those in which $R_2$ and $R_3$ are both methyl.

It will be understood that the compounds of formula I may exist in the form of optically active isomers, e.g., enantiomers, which can be prepared from optically active compounds III or separated and recovered by conventional techniques, i.e., resolution. Such isomeric forms are also included within the scope of this invention.

The compounds of formula I of this invention possess pharmacological activity. In particular the compounds of the formula I are indicated for use in controlling the cholesterol ester content of mammalian arterial walls and are therefore particularly indicated for use as anti-atherosclerotic agents, i.e. agents useful in the prophylactic treatment of atherosclerosis and in the controlling of atherosclerotic conditions due to cholesterol ester accumulation in the arterial walls. Such ability of the compounds of the formula I is indicated by known test procedures in which the total cholesterol ester content of cultured cells is shown to be reduced by a test compound, as compared to untreated cells, and carried out, for example, by the following procedures:

A) *CELL CULTURE*

Rhesus monkey smooth muscle cells (from the arterial, e.g., aorta, wall) obtained by the method of K. Fischer-Dzoga et al. [Experimental and Molecular Pathology *18*, 162—176 (1973)] are routinely grown in 75 $cm^2$ tissue culture flasks using Minimum Essential Medium (Eagle) supplemented with 10% foetal bovine serum. For testing a 75 $cm^2$ flask with a near confluent cell growth is selected. The cells are removed from the flask surface by mild enzymatic treatment with pronase. After centrifugation and decanting the enzyme solution, the cell pellet is resuspended in an appropriate volume of media for seeding the desired number of 60 mm tissue culture dishes. Five (5) ml of the diluted cell suspension are pipetted into each dish. After seeding, the dishes are labelled with the cell type, date and flask number of origin and incubated at 37°C in approximately 5% $CO_2$ atmosphere in a high humidity incubator. When the cultures are confluent, the actual drug testing is begun. Test compounds are routinely solubilized in 100% ethanol. An equivalent amount of ethanol is added to control groups as well. The tissue culture dishes are randomly divided into groups. To one group, hyperlipemic rabbit serum (HRS) is added at 5% by volume (control). To the remaining groups, 5% HRS and 0,1 to 1 mg per 100 ml of media of the test compound are added. The dishes are returned to the incubator for an additional 24 hours. All operations through to the final incubation are performed using sterile technique in a laminar flow hood. After the incubation period, the dishes are microscopically observed with the Zeiss Axiomat with phase contrast optics and the conditions of the cultures are recorded; especially in regard to the size, number and configuration of cytoplasmic inclusions and to cellular morphology. The media is removed from the cultures and 0.9% sodium chloride solution is added. The cells are removed from the flasks with the aid of a rubber policeman and transferred to a conical granuated centrifuge tube. The cells are washed three times by suspending in an isotonic salt solution, centrifuging at 800 × g for 10 minutes and aspirating the supernatant fluid.

B) *CELL EXTRACTION PROCEDURE*

An appropriate volume of isopropyl alcohol (about 1 ml/mg protein) is then added to the cell pellet and the sample sonicated with a micro probe (140 × 3 mm) for 10 seconds with a "LO" setting of 50 on a Bronwell Biosonik IV. After centrifugation for 15 minutes at 800 × g, the clear supernatant is decanted and an aliquot taken for cholesterol analysis.

The residue is dissolved in 0.1N sodium hydroxide and an aliquot taken for protein determination by the method of Lowry et al. (J. Biol. Chem. *193*, 265; 1951).

C) *ASSAY*

Free cholesterol: The isopropyl alcoholic solutions of standards, samples and blank (isopropyl alcohol alone) are treated in a similar manner. An aliquot of 0.4 ml of free agent (Reagent A, Table 1 below) is added to a 10 × 75 mm disposable glass test tube to which 20 $\mu$l of the isopropyl alcoholic solution is added and mixed. After standing at room temperature for approximately 5 minutes, 0.8 ml of 0.5N sodium hydroxide (Reagent C, Table 1) is added and mixed. The fluorescence is measured with an Aminco-Bowman Spectrophotofluorometer with an excitation wavelength of 325 nm and emission wavelength of 415 nm. A 1 cm light path cuvette is used with a Xenon lamp, an IP28 Photomultiplier tube and 2 mm slits.

Total cholesterol: The same procedure described above for free cholesterol is followed for total cholesterol except that the total reagent (Reagent B, Table 1) is used instead of the reagent and the samples are incubated for 20 minutes at 37°C before the addition of the 0.5N sodium hydroxide solution (Reagent C, Table 1).

Alternatively, the assay for cholesterol, i.e. Step C) (above) obtained from Steps A) and B), may be carried out by the method of Ishikawa et al (J. Lipid Res. *15*, 286; 1974).

The amount of cholesterol ester is found by subtracting the amount of free cholesterol from the total cholesterol content of the cells determined by the assay. A finding of a lower amount of cholesterol ester in the group of cells to which the test compound was added, as compared to the control group (untreated) shows that the test compound is active in reducing the cholesterol ester in the cells.

TABLE 1

Composition of Reagents for Cholesterol Determination

| | | | |
|---|---|---|---|
| A. | *Free Cholesterol Reagent* | | |
| | Sodium phosphate buffer pH 7.0 | 0,05 | M |
| | Cholesterol oxidase | 0,08 | U/ml |
| | Horseradish peroxidase | 30,00 | U/ml |
| | p-Hydroxyphenylacetic acid | 0,10 | mg/ml |
| B. | *Total Cholesterol Reagent* | | |
| | Sodium phosphate buffer pH 7.0 | 0,05 | M |
| | Cholesterol ester hydrolase | 0,08 | U/ml |
| | Cholesterol oxidase | 0,08 | U/ml |
| | Horseradish peroxidase | 30,00 | U/ml |
| | Sodium taurocholate | 5,00 | mM |
| | Carbowax—6000 | 0,17 | mM |
| | p-Hydroxyphenylacetic acid | 0,15 | mg/ml |
| C. | *Sodium Hydroxide Solution* | 0,5N | |

For the above-mentioned use, an indicated suitable daily dosage is from 10 mg to about 5,000 mg, suitably administered in divided doses of 2.5 to 2,500 mg, two to four times daily or in retard form.

For the use of compounds of formula Ia, an indicated suitable daily dosage is from about 10 mg to about 1,000 mg, suitably administered in divided doses of from 2.5 to 500 mg, two to four times daily or in retard form.

With respect to compounds of formula Ib, an indicated suitable daily dosage is from about 100 mg to about 5,000 mg, preferably from about 100 mg to 2,000 mg and suitably administered in divided doses of from 25 to 2,500 mg, two to four times daily or in retard form.

The compounds may be admixed with conventional pharmaceutically acceptable diluents and carriers and, optionally, other excipients, and administered in such forms as tablets or capsules.

The following Preparations and Examples illustrate the invention.

PREPARATION 1:

*4,4-dimethyl-4-sila-tetradecene-1*. Compound VIII

Under nitrogen, 205 g (0.928 mole) of 1-bromodecane is added to a stirred mixture of 73 g of magnesium turnings (3.04 mole), 570 ml of absolute tetrahydrofuran and 183 g (172 ml, 1.42 mole) of dimethyldichlorosilane at such a rate that after initiation, with external cooling, the reaction temperature does not rise above 40°C. After addition and the completion of the exothermic reaction, the mixture is stirred for 1 hour at 40°C. A Gilman test on a sample shows that all Grignard reagent is consumed. The resulting mixture is concentrated *in vacuo* under strictly anhydrous conditions. The resulting semi-solid mass is stirred at about 45° to 65°C while 218 g (1.8 mole) of allyl bromide and 400 ml of absolute tetrahydrofuran are added. The exothermic reaction is controlled by cooling. Stirring is continued at 60° for 16 hours. The mixture is then cooled, 2 l of hexane are then added, and the contents poured into 318 g of ammonium chloride dissolved in water plus ice. The organic phase is

separated after addition of some ligroin. The product is then washed with three portion of water, dried with anhydrous sodium sulfate, filtered and concentrated *in vacuo*. The crude product is fractionated through a packed column to obtain fractions of 4,4-dimethyl-4-sila-tetradecene-1; b.p. 69—81°/0.015—0.030 mm Hg.

PREPARATION 2:

*4,4-dimethyl-4-sila-tetradecanol.* Compound VI

Under nitrogen 270 ml of 1M borate in tetrahydrofuran (0.81 equivalents) are added while maintaining the temperature below 25°C to 166.4 g (0.69 mole) of 4,4-dimethyl-4-sila-tetradecene-1 in 550 ml of absolute tetrahydrofuran. The reaction mixture is allowed to stand for 1/2 hour at 20°C, then 10 ml of water are carefully added to react away excess hydride ($H_2$ evolution). When gas evolution ceases, 140 g (1.39 mole) of triethylamine are added, followed by 93 g (1.03 mole) of tert-butyl hydroperoxide with cooling to 5—20°C (exothermic). The reaction mixture is then allowed to stand at 20°C for 16 hours and concentrated *in vacuo* below 40°C. The concentrate is distributed between toluene and dilute aqueous sodium hydroxide, the organic phase is washed with more sodium hydroxide, twice with water, twice with slightly acidified (HCl) ferrous sulfate solution (to remove any remaining peroxide), twice with dilute hydrochloric acid and once with sodium bicarbonate solution, dried over sodium sulfate, filtered and concentrated *in vacuo* to give a colorless oil which is then fractionated *in vacuo* through a column containing a stainless steel protruded packing to obtain the title product; b.p. 110°—114°C/0.035 mm.

PREPARATION 3:

*4,4-dimethyl-4-sila-tetradecanoic acid.* Compound IV

A solution of 143.4 g (0.554 mole) of 4,4-dimethyl-4-sila-tetradecanol in 1.2 l of acetone is cooled to −10°C. With cooling to −10 to 0°C and stirring, 302 ml of Jones reagent (8N in oxidation equivalents of chromic acid in aqueous sulfuric acid) (4.36 × 0.554 electron equivalents) are added over a period of 30 minutes. Stirring is continued at −10 to 0°C for 45 minutes, and at 0 to 5°C for 1 hour. While stirring, the mixture is allowed to warm to 10°C in 1/2 hour after which it is poured on ice plus heptane. The organic phase is washed three times with a semi-saturated sodium chloride solution, twice with water, dried over sodium sulfate, filtered and concentrated *in vacuo* to yield an oil. Most of the resulting material is fractionally distilled through a column packed with a stainless steel protruded packing to give the title product; b.p. 138—140°C/0.05 mm.

PREPARATIONS 4—21:

Following the above procedures and using corresponding starting materials in equivalent amounts, the following products (in which $R_2$ and $R_3$ are $CH_3$) are obtained:

| Substituent $R_1$ | Preparation of Compounds VIII | Preparation of Compounds VI | Preparation of Compounds IV |
|---|---|---|---|
| $CH_3—$ | 4 | 10 | 16 |
| $CH_3—(CH_2)_2—$ | 5 | 11 | 17 |
| $CH_3—(CH_2)_4—$ | 6 | 12 | 18 |
| $CH_3—(CH_2)_6—$ | 7 | 13 | 19 |
| $CH_3—(CH_2)_7—$ | 8 | 14 | 20 |
| $CH_3—(CH_2)_{17}—$ | 9 | 15<br>b.p. 178—182°C<br>at 0.035 mm | 21<br>m.p.43—45°C |

Example 1

*(+)-4,4-dimethyl-4-sila-tetradecanoyl-1'-phenyl-ethylamide.* Compound I

To 35 g (128.5 m mole) of 4,4-dimethyl-4-sila-tetradecanoic acid in 200 ml of methylene dichloride there are added 14.3 g (128.5 m mole) of triethylamine while maintaining the temperature between 20 to 30°C (exothermic). The resultant clear solution is maintained at 0° to −20°C while 15.4 g (128.5 m mole) of ethylchloroformate in 100 ml of methylene chloride are added, yielding the mixed anhydride of the formula II. The resultant mixture is then allowed to come to a temperature of 15°C over a period of 3/4 hour, and then 34.4 g (2 × 1.1 × 128.5 m mole) of (+)-$\alpha$-methylbenzyl-amine are added with continued stirring while maintaining the temperature below 20°C. The mixture is

subsequently stirred at 20°C for 3 hours, then poured on ice. The organic phase is washed twice with 1N hydrochloric acid and once with a mixture of sodium bicarbonate and sodium carbonate solution, dried with sodium sulfate, filtered and concentrated *in vacuo* to give 47.2 g of an oil. Evaporative distillation using a "Kugelrohr" device gives the microanalytically pure title product; m.p. 32 to 34°C, as the last fraction, from a temperature of 170—177°C at 0.06 mm Hg.

Example 2

*(±)-4,4-Dimethyl-4-sila-tetradecanoyl-1'-phenyl-2'-p-tolyl-ethylamide* (Compound I)

To a dry flask there is added 3.17 g (11.6 m mole) of 4,4-dimethyl-4-sila-tetradecanoic acid, 2.53 g (23.2 m mole) of triethylamine and 5 ml of methylene chloride. The resulting solution is cooled in an ice bath. With stirring and while maintaining the temperature at 0°C, a solution of 1.385 g (12.8 m mole) of ethylchloroformate in 3 ml of methylene dichloride is added in approximately one minute and the resulting solution is then treated with 2 ml of methylene dichloride. The resultant white slurry is stirred at 0°C for one hour. A solution of 2.45 g (11.6 m mole) of (±)1-phenyl-2-*p*-tolylethylamine in 3 ml of methylene dichloride is then added with stirring in the ice bath followed by 2 ml of methylene dichloride rinse. The resulting mixture is allowed to warm to room temperature while maintaining stirring. Gentle stirring is continued for an additional 48 hours. The reaction mixture is then washed with approximately 25 ml of water following which the organic phase is extracted with dilute hydrochloric acid until the aqueous extract is acidic. The organic phase is then washed with a sodium bicarbonate solution (pH = 8), dried over anhydrous sodium sulphate, filtered and concentrated *in vacuo* at 40°C to yield a colourless oil. This oil was chromatographed on silica gel eluting with 1:1 hexane:chloroform, to obtain the title compound, m.p. 39—42°.

Following the procedure of Examples 1 and 2 and using corresponding starting materials in nearly equivalent amounts, the following products of formula I (in which $R_2$ and $R_3$ are methyl) are obtained:

| Ex. | Prep. acc. to Ex. | Substituent $R_1$ | Substituent R | Characteristics |
|---|---|---|---|---|
| 3 | 2 | $CH_3-(CH_2)_{17}-$ | 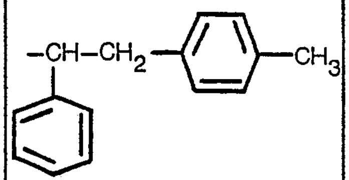 | (±) m.p. 64–65°C |
| 4 | 2 | $CH_3-$ | ,, | (±) m.p. 91–95°C |
| 5 | 2 | $CH_3-(CH_2)_2-$ | ,, | (±), oil |
| 6 | 2 | $CH_3-(CH_2)_7-$ | ,, | (±), oil |
| 7 | 2 | $CH_3-(CH_2)_9-$ | ,, | (+) |
| 8 | 2 | ,, | ,, | (–) |
| 9 | 2 | ,, | 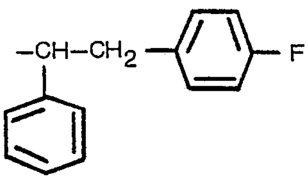 | (±) |
| 10 | 2 | ,, | 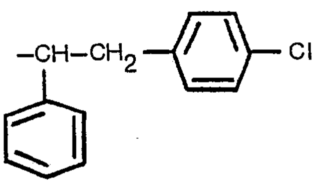 | (±) |
| 11 | 2 | ,, | 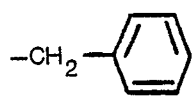 | |
| 12 | 2 | $CH_3-$ | ,, | oil |
| 13 | 1 | $CH_3-(CH_2)_{17}-$ | 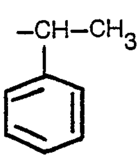 | (+) m.p. 61–62°C |
| 14 | 1 | $CH_3-(CH_2)_4-$ | ,, | (+) |
| 15 | 1 | $CH_3-(CH_2)_9-$ | ,, | (+) |
| 16 | 1 | $CH_3-(CH_2)_9-$ | ,, | (–) |
| 17 | 1 | ,, | ,, | (±) |

| Ex. | Prep. acc. to Ex. | Substituent $R_1$ | Substituent R | Characteristics |
|---|---|---|---|---|
| 18 | 1 | $CH_3-(CH_2)_9-$ | 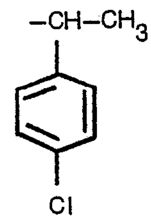 | (+) |
| 19 | 1 | " | 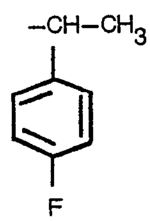 | (+) |
| 20 | 1 | " | 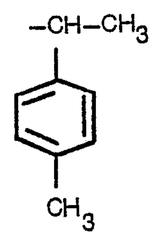 | (+) |
| 21 | 1 | " | 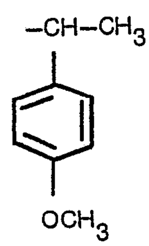 | (+) |
| 22 | 1 | " | 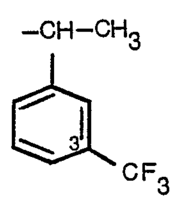 | (+) |
| 23 | 2 | 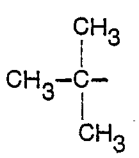 | 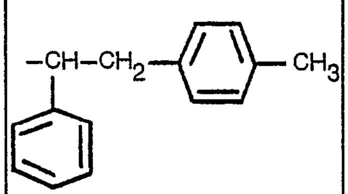 | (±) oil |
| 24 | 2 | $CH_3-(CH_2)_9-$ | 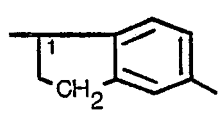 | |

| Ex. | Prep. acc. to Ex. | Substituent $R_1$ | Substituent R | Characteristics |
|---|---|---|---|---|
| 25 | 2 | $CH_3-(CH_2)_9$ | 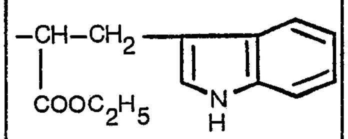 | (±), m.p. 54°C |
| 26 | 2 | ,, | 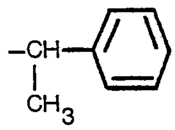 | (±) |
| 27 | 2 | ,, | 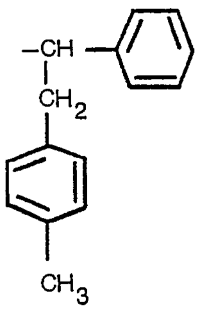 | |

In the following table are given NMR values for oily compounds of the invention. The values are expressed in ppm, based on the reference compound tetramethylsilane at 0 ppm, the solvent is $CDCl_3$ (D = deuterium).

In the table the following symbols are used: s — singlet, d — doublet, q — quartet, m — multiple, and b — broad, numbers given in parenthesis are number of protons.

| Ex. | NMR values |
|---|---|
| 5 | m 7.2(5), s 6.95(4), d 5.86(1), q 5.2(1), d 3.03(2), s 2.25(3), m 2.0(2), m 1.25(2), m 0.9(3), m 0.5(2 plus 2) s –0.07(6) |
| 6 | s 7.35(5), s 7.08(4), d 6.07(1), q 5.35(1), d 3.15(2), s 2.35(3), m 2.2(2), s 1.3(12), m 1.0(3), m 0.6, 0.2 (2) plus (2), s 0.0(6) |
| 12 | s 7.15(5), b 6.35(1), d 4.26(2), m 2.07(2), m 0.74(2), s –0.1(9) |
| 23 | s 7.2(5), s 6.9(4), d 5.8(1), q 5.18(1), d 2.95(2), s 2.17(3), m 2.0(2), s 0.75(9), m 0.55(2), s –0.2(6) |

**Claims for the Contracting States: BE CH DE FR GB IT LU NL SE**

1. A compound of formula I,

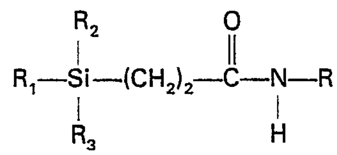

I

in which each of $R_1$, $R_2$ and $R_3$ is independently $(C_{1-22})$alkyl,
R is

a) an aralkyl radical of the formula

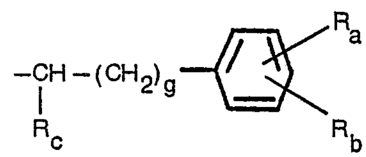

in which
g represents 0, 1 or 2,
$R_a$ is hydrogen, fluorine, chlorine, bromine or iodine, $(C_{1-4})$alkyl or alkoxy or trifluoromethyl,
$R_b$ is hydrogen, fluorine or chlorine, or $(C_{1-3})$alkyl or alkoxy,
$R_c$ is i) hydrogen
ii) a radical of the formula

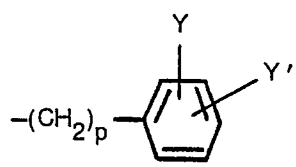

in which p is 0, 1 or 2, and
Y is hydrogen, fluorine, chlorine, bromine or iodine, or $(C_{1-4})$alkyl or alkoxy,
Y' is hydrogen, fluorine or chlorine or $(C_{1-3})$alkyl or alkoxy, or
iii) $(C_{1-8})$alkyl,

or R is

b) an indolyl radical of the formula

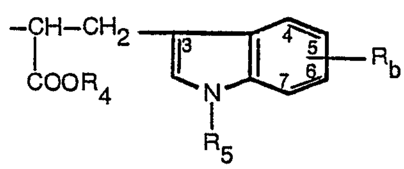

in which $R_b$ is as defined under a)
$R_4$ is $(C_{1-8})$alkyl or unsubstituted benzyl, and
$R_5$ is hydrogen, $(C_{1-8})$alkyl or unsubstituted benzyl,

or R is

c) a benzocycloalkyl radical of the formula

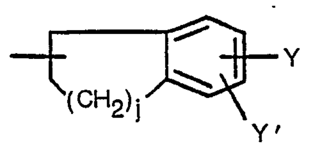

in which Y and Y' are as defined under a) and
j is from 1 to 4.

2. A compound according to claim 1 of formula Ia,

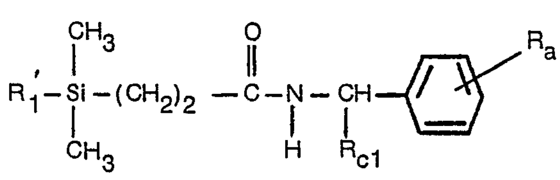

Ia

in which $R_1'$ is $(C_{1-22})$alkyl, in which any branching is on other than the $\alpha$-carbon atom, $R_a$ is as defined in Claim 1, and $R_{c1}$ is

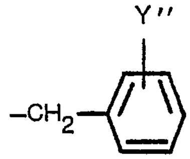

in which Y'' is fluorine, chlorine, bromine or iodine or $(C_{1-4})$alkyl.

3. A compound according to claim 2 wherein $R_1'$ is $C_{5-22}$alkyl.

4. A compound according to Claim 3 wherein $R_1'$ is $C_8$—$C_{18}$ alkyl.

5. A compound according to claim 1 of formula Ib,

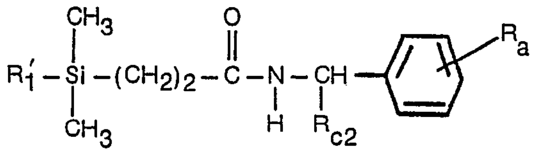

Ib

in which $R_1'$ and $R_a$ are as defined in any one of Claims 2 to 4 and $R_{c2}$ is $(C_{1-4})$alkyl.

6. 4,4-Dimethyl-4-sila-tetradecanoyl-1'-phenyl-2'-p-tolyl-ethylamide.

7. A pharmaceutical composition comprising a compound of any one of the preceding Claims in association with a pharmaceutically acceptable diluent or carrier.

8. A compound according to any one of the preceding Claims for use as anti-atherosclerotic agents.

9. A process for the preparation of a compound according to Claim 1 which comprises acylating a compound of formula III,

$$H_2N—R \qquad III$$

with a compound of the formula

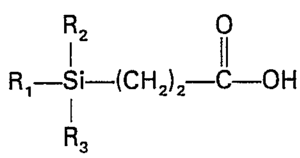

IV

or a reactive derivative thereof, R, $R_1$, $R_2$ and $R_3$ being as defined in Claim 1.

10. A compound of the formula IV,

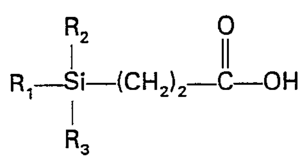

IV

in which $R_1$ represents $(C_{8-18})$alkyl and $R_2$ and $R_3$ are as defined in Claim 1.

11. A compound of formula IV, stated in Claim 10, in which any branching in $R_1$ is on other than the $\alpha$-carbon atom, and $R_2$ and $R_3$ are both methyl.

**Claims for the Contracting State: AT**

1. A process for the preparation of a compound of formula I

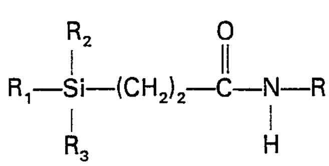

I

in which each of $R_1$, $R_2$ and $R_3$ is independently $(C_{1-22})$alkyl,
R is

a) an aralkyl radical of the formula

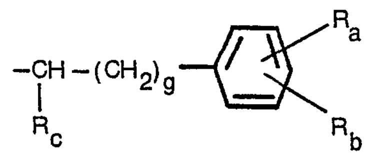

in which
g represents 0, 1 or 2,
$R_a$ is hydrogen, fluorine, chlorine, bromine or iodine, $(C_{1-4})$alkyl or alkoxy or trifluoromethyl,
$R_b$ is hydrogen, fluorine or chlorine, or $(C_{1-3})$alkyl or alkoxy,
$R_c$ is i) hydrogen
ii) a radical of the formula

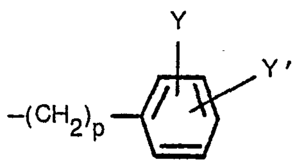

in which p is 0, 1 or 2, and
Y is hydrogen, fluorine, chlorine, bromine or iodine, or $C_{1-4}$)alkyl or alkoxy,
Y' is hydrogen, fluorine or chlorine or $(C_{1-3})$alkyl or alkoxy, or
iii) $C_{1-8}$)alkyl,

or R is

b) an indolyl radical of the formula

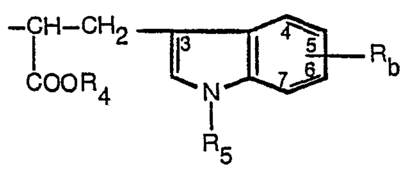

in which $R_b$ is as defined under a)
$R_4$ is $(C_{1-8})$alkyl or unsubstituted benzyl, and
$R_5$ is hydrogen, $(C_{1-8})$alkyl or unsubstituted benzyl,

or R is

c) a benzocycloalkyl radical of the formula

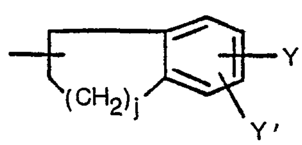

in which Y and Y' are as defined under a) and
j is from 1 to 4,

which comprises acylating a compound of formula III,

$$H_2N—R \qquad III$$

with a compound of the formula

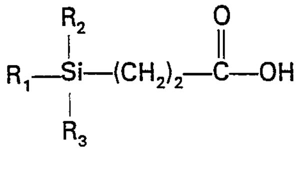

IV

or a reactive derivative thereof,
R, $R_1$, $R_2$ and $R_3$ being as defined above.

2. A process according to Claim 1, whereby the compound obtained is of formula Ia

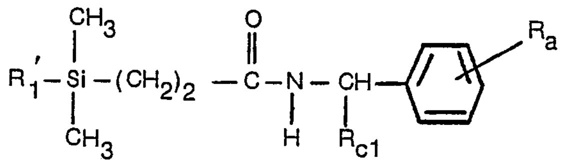

Ia

in which $R'_1$ is $(C_{1-22})$alkyl, in which any branching is on other than the $\alpha$-carbon atom,
$R_a$ is as defined in Claim 1,
and $R_{c1}$ is

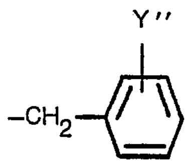

in which Y″ is fluorine, chlorine, bromine or iodine or $(C_{1-4})$alkyl.

3. A process according to Claim 2, wherein in formula Ia, $R'_1$ is $(C_{5-22})$alkyl.

4. A process according to Claim 2, wherein in formula Ia $R'_1$ is $(C_{8-18})$alkyl.

5. A process according to Claim 1 whereby the compound obtained is of formula Ib

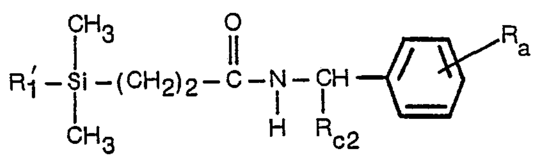

Ib

in which $R'_1$ and $R_a$ are as defined in any one of Claims 2 to 4 and $R_{c2}$ is $(C_{1-4})$alkyl.

6. A process according to Claim 1, whereby the compound obtained is 4,4-dimethyl-4-sila-tetradecanoyl-1′-phenyl-2′-p-tolyl-ethylamide.

7. A compound of formula I as represented in Claim 1, whenever prepared by a process according to any one of the preceding claims.

8. A pharmaceutical composition comprising a compound according to Claim 7 in association with a pharmaceutically acceptable diluent or carrier.

9. A process for preparing a pharmaceutical composition which comprises admixing a compound of formula I

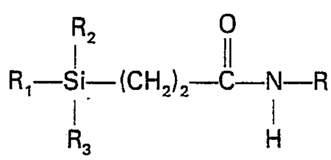

I

in which each of $R_1$, $R_2$ and $R_3$ is independently $(C_{1-22})$alkyl,
R is
a) an aralkyl radical of the formula

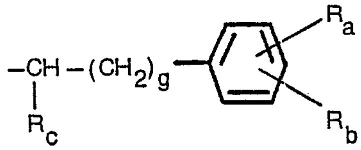

in which
g represents 0, 1 or 2,
$R_a$ is hydrogen, fluorine, chlorine, bromine or iodine, $(C_{1-4})$alkyl or alkoxy or trifluoromethyl,
$R_h$ is hydrogen, fluorine or chlorine, or $(C_{1-3})$alkyl or alkoxy,
$R_c$ is i) hydrogen
ii) a radical of the formula

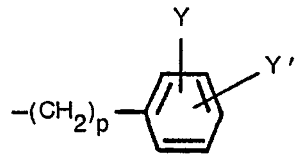

in which p is 0, 1 or 2, and
Y is hydrogen, fluorine, chlorine, bromine or iodine, or $C_{1-4}$)alkyl or alkoxy,
Y' is hydrogen, fluorine or chlorine or $(C_{1-3})$alkyl or alkoxy, or
iii) $C_{1-8}$)alkyl,
or R is
b) an indolyl radical of the formula

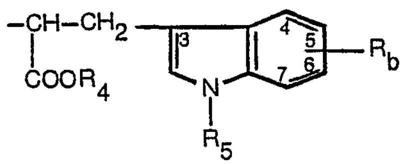

in which $R_b$ is as defined under a)
$R_4$ is $(C_{1-8})$alkyl or unsubstituted benzyl, and
$R_5$ is hydrogen, $(C_{1-8})$alkyl or unsubstituted benzyl,
or R is
c) a benzocycloalkyl radical of the formula

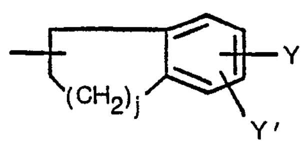

in which Y and Y' are as defined under a) and
j is from 1 to 4,
together with a pharmaceutically acceptable diluent or carrier.

**Patentansprüche für die Vertragsstaaten: BE CH DE FR GB IT LU NL SE**

1. Eine Verbindung der Formel I

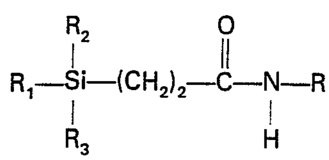

I

in welcher jedes von
$R_1$, $R_2$ und $R_3$ unabhängig voneinander $(C_1—C_{22})$Alkyl ist,
R a) ein Aralkylrest der Formel

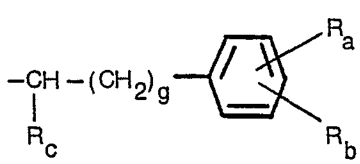 ist

in welcher
g 0, 1 oder 2 darstellt,
Ra Wasserstoff, Fluor, Chlor, Brom oder Iod, $(C_{1-4})$Alkyl oder Alkoxy oder Trifluormethyl ist,
Rb Wasserstoff, Fluor oder Chlor oder $(C_{1-3})$Alkyl oder Alkoxy ist,
Rc i) Wasserstoff,
ii) einen Rest der Formel

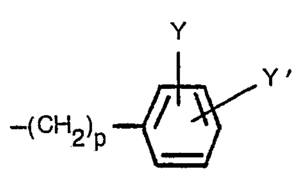

in welchem
p 0, 1 oder 2 ist und
Y Wasserstoff, Fluor, Chlor, Brom oder Iod oder $(C_{1-4})$Alkyl oder Alkoxy ist,
Y' Wasserstoff, Fluor oder Chlor oder $(C_{1-3})$Alkyl oder Alkoxy ist oder
iii) $(C_{1-8})$Alkyl ist,
oder b) einen Indolylrest der Formel

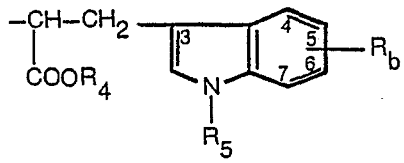 ist

in welchem
Rb wie unter a) definiert ist,
$R_4$ $(C_{1-8})$Alkyl oder unsubstituiertes Benzyl, und
$R_5$ Wasserstoff, $(C_{1-8})$Alkyl oder unsubstituiertes Benzyl ist,
oder c) einen Benzcycloalkylrest der Formel

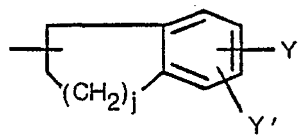 ist

in welchem Y und Y' wie unter a) definiert sind und
j von 1 bis 3 ist.

2. A Verbindung gemäss Anspruch 1 der Formel Ia

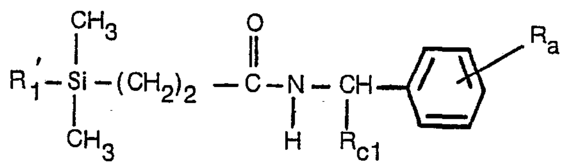 Ia

in welcher $R_1'$ $C_{1-22}$Alkyl ist, in welchem etwaige Verzweigungen auf einem anderen als dem $\alpha$-Kohlenstoffatom sind,
Ra wie im Anspruch 1 definiert ist, und
Rc1

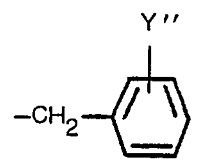 ist,

in welcher Y'' Fluor, Chlor, Brom oder Iod, oder $(C_{1-4})$Alkyl ist.

3. Eine Verbindung gemäss Anspruch 2 worin $R'_1$ $C_{5-22}$Alkyl ist.

4. Eine Verbindung gemäss Anspruch 3 worin $R'_1$ $C_{8-18}$Alkyl ist.

5. Eine Verbindung gemäss Anspruch 1 der Formel Ib

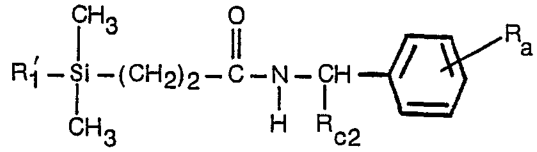 Ib

in welcher $R'_1$ und Ra wie in einem der Ansprüche 2 bis 4 definiert sind und Rc2 $(C_{1-4})$Alkyl ist.

6. 4,4-Dimethyl-4-sila-tetradecanoyl-1'-phenyl-2'-p-tolyl-ethylamid.

7. Eine pharmazeutische Zusammensetzung bestehend aus einer Verbindung gemäss einem der vorgehenden Ansprüche zusammen mit einem pharmazeutisch annehmbaren Verdünner oder Träger.

8. Ein Verbindung gemäss einem der vorgehenden Ansprüche zur Verwendung als antiatheroskelortische Mittel.

9. Ein Verfahren zur Herstellung einer Verbindung gemäss Anspruch 1 bestehend aus Acylierung einer Verbindung der Formel III

$H_2N—R$ III

mit einer Verbindung der Formel IV

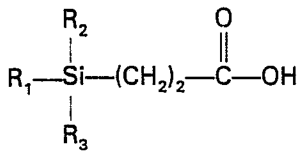
IV

oder einem reaktionsfähigen Derivat derselben
wobei R, $R_1$, $R_2$ und $R_3$ wie in Anspruch 1 definiert sind.

10. Eine Verbindung der Formel IV

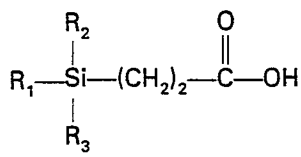
IV

in welcher $R_1$ ($C_{8-18}$)Alkyl bedeutet und $R_2$ und $R_3$ wie im Anspruch 1 definiert sind.

11. Eine Verbindung der Formel IV wie im Anspruch 10 genannt, in welcher etwaige Verzweigungen in $R_1$ auf einem anderen als dem $\alpha$-Kohlenstoffatom ist, und $R_2$ und $R_3$ beides Methyl sind.

**Patentansprüche für den Vertragsstaat: AT**

1. Ein Verfahren zur Herstellung einer Verbindung der Formel I

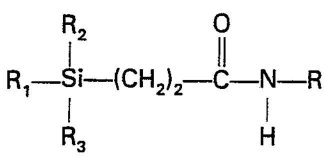
I

in welcher jedes von
$R_1$, $R_2$ und $R_3$ unabhängig voneinander ($C_1$—$C_{22}$)Alkyl ist,
R a) ein Aralkylrest der Formel

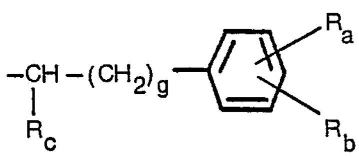
ist

in welcher
g 0, 1 oder 2 darstellt,
Ra Wasserstoff, Fluor, Chlor, Brom oder Iod, ($C_{1-4}$)Alkyl oder Alkoxy oder Trifluormethyl ist,
Rb Wasserstoff, Fluor oder Chlor oder ($C_{1-3}$)Alkyl oder Alkoxy ist,
Rc i) Wasserstoff,
ii) einen Rest der Formel

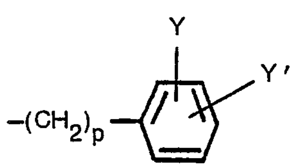

in welchem
p 0, 1 oder 2 ist und
Y Wasserstoff, Fluor, Chlor, Brom oder Iod oder ($C_{1-4}$)Alkyl oder Alkoxy ist,
Y' Wasserstoff, Fluor oder Chlor oder ($C_{1-3}$)Alkyl oder Alkoxy ist oder
iii) ($C_{1-8}$)Alkyl ist,
oder b) einen Indolylrest der Formel

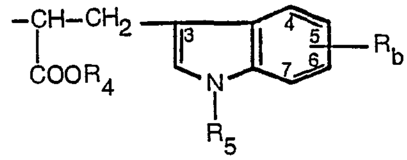 ist

in welchem
Rb wie unter a) definiert ist,
$R_4$ $(C_{1-8})$Alkyl oder unsubstituiertes Benzyl, und
$R_5$ Wasserstoff, $(C_{1-8})$Alkyl oder unsubstituiertes Benzyl ist,
oder c) einen Benzcycloalkylrest der Formel

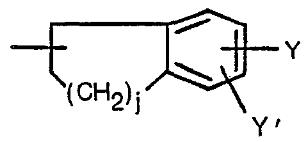 ist

in welchem Y und Y′ wie unter a) definiert sind und
j von 1 bis 3 ist,
bestehend aus Acylierung einer Verbindung der Formel III

$$H_2N—R \qquad III$$

mit einer Verbindung der Formel IV
oder einem reaktionsfähigen Derivat derselben wobei R, $R_1'$, $R_2$ und $R_3$

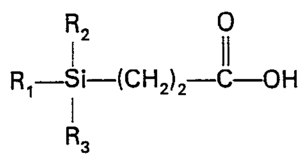 IV

wie oben definiert sind.

2. Ein Verfahren gemäss Anspruch 1, wobei die erhaltene Verbindung die Formel Ia hat

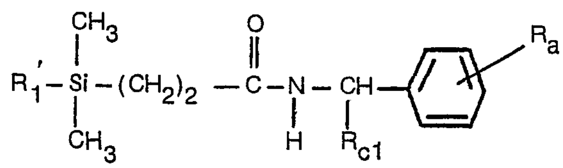 Ia

in welcher $R_1'$ $C_{1-22}$Alkyl ist, in welchem etwaige Verzweigungen auf einem anderen als dem $\alpha$-Kohlenstoffatom sind,
Ra wie im Anspruch 1 definiert ist, und
Rc1

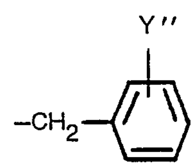 ist,

in welcher Y″ Fluor, Chlor, Brom oder Iod, oder $(C_{1-4})$Alkyl ist.

3. Ein Verfahren gemäss Anspruch 2, worin in der Formel Ia, $R'_1$ $(C_{5-22})$Alkyl ist.

4. Ein Verfahren gemäss Anspruch 2, worin in der Formel Ia$R'_1$ $(C_{8-18})$Alkyl ist.

5. Ein Verfahren gemäss Anspruch 1, wobei die erhaltene Verbindung die Formel Ib hat

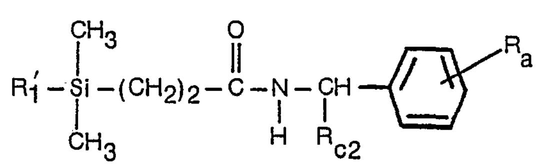 Ib

in welcher $R'_1$ und Ra wie in einem der Ansprüche 2 bis 4 definiert sind und Rc2 $(C_{1-4})$Alkyl ist.

6. Ein Verfahren gemäss Anspruch 1, wobei die erhaltene Verbindung 4,4-Dimethyl-4-sila-tetradecanoyl-1′-phenyl-2′-p-tolyl-ethylamid ist.

7. Eine Verbindung der Formel I wie im Anspruch 1 dargestellt und erhalten nach einem Verfahren gemäss einem der vorgehenden Ansprüche.

8. Eine pharmazeutische Zusammensetzungen bestehend aus einer Verbindung gemäss Anspruch 7 zusammen mit einem pharmazeutisch annehmbaren Verdünner oder Träger.

9. Ein Verfahren zur Herstellung einer pharmazeutische Zusammensetzung, welche aus dem Mischen einer Verbindung der Formel I

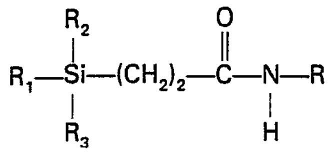

I

in welcher jedes von
$R_1$, $R_2$ und $R_3$ unabhängig voneinander $(C_1—C_{22})$Alkyl ist,
R a) ein Aralkylrest der Formel

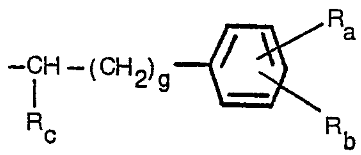

ist

in welcher
g 0, 1 oder 2 darstellt,
Ra Wasserstoff, Fluor, Chlor, Brom oder Iod, $(C_{1-4})$Alkyl oder Alkoxy oder Trifluormethyl ist,
Rb Wasserstoff, Fluor oder Chlor oder $(C_{1-3})$Alkyl oder Alkoxy ist,
Rc i) Wasserstoff,
ii) einen Rest der Formel

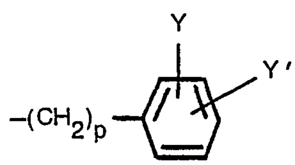

in welchem
p 0, 1 oder 2 ist und
Y Wasserstoff, Fluor, Chlor, Brom oder Iod oder $(C_{1-4})$Alkyl oder Alkoxy ist,
Y′ Wasserstoff, Fluor oder Chlor oder $(C_{1-3})$Alkyl oder Alkoxy ist oder
iii) $(C_{1-8})$Alkyl ist,
oder b) einen Indolylrest der Formel

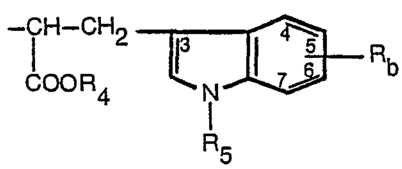

ist

in welchem
Rb wie unter a) definiert ist,
$R_4$ $(C_{1-8})$Alkyl oder unsubstituiertes Benzyl, und
$R_5$ Wasserstoff, $(C_{1-8})$Alkyl oder unsubstituiertes Benzyl ist,
oder c) einen Benzcycloalkylrest der Formel

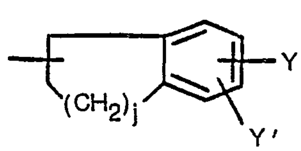

ist

in welchem Y und Y′ wie unter a) definiert sind und
j von 1 bis 3 ist,
zusammen mit einem pharmazeutisch annehmbaren Verdünner und Träger besteht.

**Revendications pour les Etats contractants: BE CH DE FR GB IT LU NL SE**

1. Un composé de formule I,

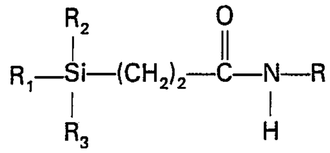

I

dans laquelle chacun de $R_1$, $R_2$ et $R_3$ est indépendamment $(C_{1-22})$alkyle,
R est
a) un radical aralkyle de formule

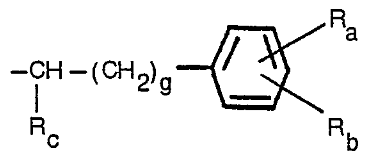

dans laquelle
g représente 0, 1 ou 2,
$R_a$ est l'hydrogène, le fluor, le chlore, le brome ou l'iode, $(C_{1-4})$alkyle ou alcoxy ou trifluorométhyle,
$R_b$ est l'hydrogène, le fluor ou le chlore, ou $(C_{1-3})$alkyle ou alcoxy,
$R_c$ est i) l'hydrogène,
ii) un radical de formule

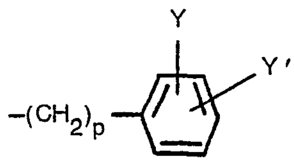

dans laquelle
p est 0, 1 ou 2, et
Y est l'hydrogène, le fluor, le chlore, le brome ou l'iode, ou $(C_{1-4})$alkyle ou alcoxy,
Y' est l'hydrogène, le fluor ou le chlore ou $(C_{1-3})$alkyle ou alcoxy ou
iii) $(C_{1-8})$alkyle,
ou bien R est
b) un radical indolyle de formule

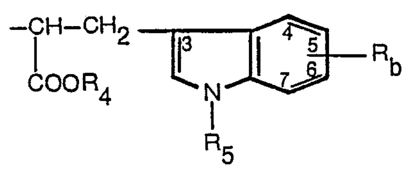

dans laquelle
$R_b$ est tel que défini sous a)
$R_4$ est $(C_{1-8})$alkyle ou benzyle non substitué, et
$R_5$ est l'hydrogène, $(C_{1-8})$alkyle ou benzyle non substitué,
ou bien R est
c) un radical benzocyloalkyle de formule

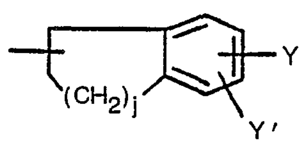

dans laquelle
Y et Y' sont tels que définis sous a) et
j est de 1 à 4.

2. Un composé selon la revendication 1, de formule Ia,

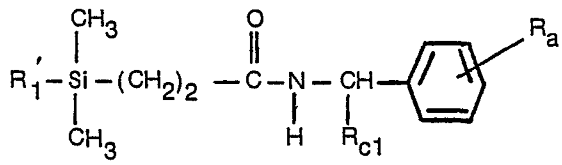 Ia

dans laquelle $R_1'$ est $(C_{1-22})$alkyle, dans lequel toute ramification est sur une position autre que l'atome de carbone $\alpha$,
$R_a$ est tel que défini à la revendication 1, et
$R_{c1}$ est

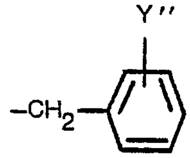

dans laquelle Y'' est le fluor, le chlore, le brome ou l'iode ou $(C_{1-4})$alkyle.

3. Un composé selon la revendication 2, dans lequel $R_1'$ est $C_{5-22}$alkyle.

4. Un composé selon la revendication 3, dans lequel $R_1'$ est $C_8$—$C_{18}$ alkyle.

5. Un composé selon la revendication 1, de formule Ib,

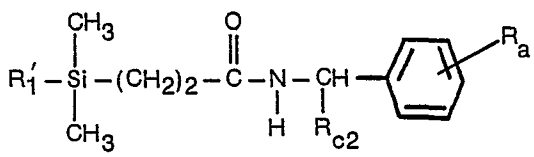 Ib

dans laquelle $R_1'$ et $R_a$ sont tels que définis à l'une quelconque des revendications 2 à 4 et $R_{c2}$ est $(C_{1-4})$alkyle.

6. 4,4-diméthyl-4-sila-tétradécanoyl-1'-phényl-2'-p-tolyl-éthylamide.

7. Une composition pharmaceutique comprenant un composé de l'une quelconque des revendications précédentes en association avec un diluant ou véhicule pharmaceutiquement acceptable.

8. Un composé selon l'une quelconque des revendications précédentes pour l'utilisation comme agents anti-athéroscléreux.

9. Un procédé pour la préparation d'un composé selon la revendication 1, qui comprend l'acylation d'un composé de formule III,

$$H_2N—R \qquad III$$

avec un composé de formule

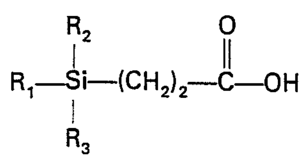 IV

ou un dérivé réactif de ce composé,
R, $R_1$, $R_2$ et $R_3$ étant tels que définis à la revendication 1.

10. Un composé de formule IV,

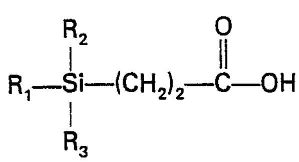 IV

dans laquelle $R_1$ représente $(C_{8-18})$alkyle et $R_2$ et $R_3$ sont tels que définis à la revendication 1.

11. Un composé de formule IV, spécifié à la revendication 10, dans lequel toute ramification dans $R_1$ est sur une position autre que l'atome de carbone $\alpha$, et $R_2$ et $R_3$ sont tous les deux méthyle.

**Revendications pour l'Etat contractant: AT**

1. Un procédé pour la préparation d'un composé de formule I

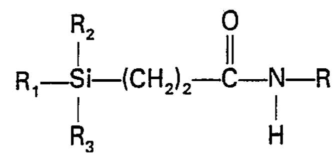

I

dans laquelle chacun de $R_1$, $R_2$ et $R_3$ est indépendamment $(C_{1-22})$alkyle,
R est
a) un radical aralkyle de formule

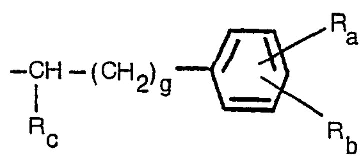

dans laquelle
g représente 0, 1 ou 2,
$R_a$ est l'hydrogène, le fluor, le chlore, le brome ou l'iode, $(C_{1-4})$alkyle ou alcoxy ou trifluorométhyle,
$R_b$ est l'hydrogène, le fluor ou le chlore, ou $(C_{1-3})$alkyle ou alcoxy,
$R_c$ est i) l'hydrogène
ii) un radical de formule

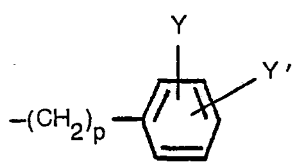

dans laquelle
p est 0, 1 ou 2, et
Y est l'hydrogène, le fluor, le chlore, le brome ou l'iode, ou $(C_{1-4})$alkyle ou alcoxy,
Y' est l'hydrogène, le fluor ou le chlore ou $(C_{1-3})$alkyle ou alcoxy, ou
iii) $(C_{1-8})$alkyle,
ou bien R est
b) un radical indolyle de formule

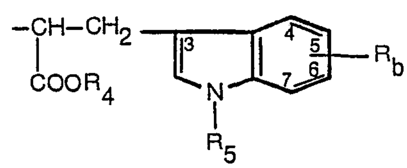

dans laquelle
$R_b$ est tel que défini sous a)
$R_4$ est $(C_{1-8})$alkyle ou benzyle non substitué, et
$R_5$ est l'hydrogène, $(C_{1-8})$alkyle ou benzyle non substitué,
ou bien R est
c) un radical benzocycloalkyle de formule

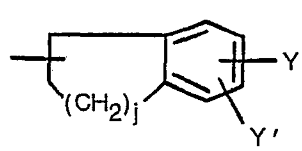

dans laquelle
Y et Y' sont tels que définis sous a) et
j est de 1 à 4,
qui comprend l'acylation d'un composé de formule III,

$H_2N—R$ III

avec un composé de formule

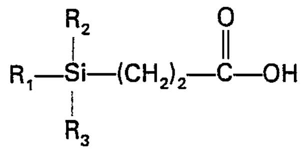

IV

ou un dérivé réactif de ce composé,
R, $R_1$, $R_2$ et $R_3$ étant tels que définis ci-dessus.

2. Un procédé selon la revendication 1, caractérisé en ce que le composé obtenu est de formule Ia,

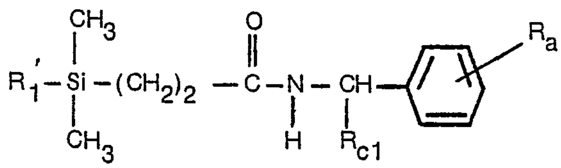

Ia

dans laquelle $R_1'$ est $(C_{1-22})$alkyle, dans lequel toute ramification est sur une position autre que l'atome de carbone $\alpha$,
$R_a$ est tel que défini à la revendication 1, et
$R_{c1}$ est

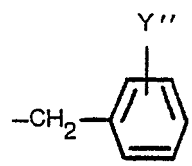

dans laquelle Y'' est le fluor, le chlore, le brome ou l'iode ou $(C_{1-4})$alkyle.

3. Un procédé selon la revendication 2, caractérisé en ce que dans la formule Ia, $R_1'$ est $(C_{5-22})$alkyle.

4. Un procédé selon la revendication 2, caractérisé en ce que dans la formule Ia, $R_1'$ est $(C_{8-18})$alkyle.

5. Un procédé selon la revendication 1, caractérisé en ce que le composé obtenu est de formule Ib

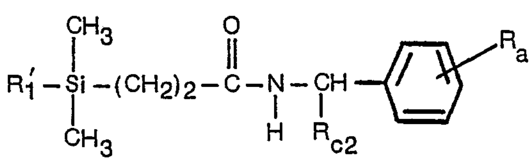

Ib

dans laquelle $R_1'$ et $R_a$ sont tels que définis à l'une quelconque des revendications 2 à 4, et
$R_{c2}$ est $(C_{1-4})$alkyle.

6. Un procédé selon la revendication 1, caractérisé en ce que le composé obtenu est le 4,4-diméthyl-4-sila-tétradécanoyl-1'-phényl-2'-p-tolyl-éthylamide.

7. Un composé de formule I tel que représenté à la revendication 1, lorsqu'il est préparé un procédé selon l'une quelconque des revendications précédentes.

8. Une composition pharmaceutique comprenant un composé selon la revendication 7, en association avec un diluant ou véhicule pharmaceutiquement acceptable.

9. Un procédé de préparation d'une composition pharmaceutique qui comprend le mélange d'un composé de formule I

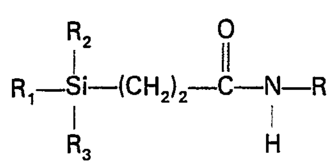

I

dans laquelle chacun de $R_1$, $R_2$ et $R_3$ est indépendamment $(C_{1-22})$alkyle,
R est

a) un radical aralkyle de formule

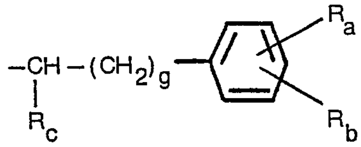

dans laquelle
g représente 0, 1 ou 2,
$R_a$ est l'hydrogène, le fluor, le chlore, le brome ou l'iode, $(C_{1-4})$alkyle ou alcoxy or trifluorométhyle,
$R_b$ est l'hydrogène, le fluor ou le chlore, ou $(C_{1-3})$alkyle ou alcoxy,
$R_c$ est i) l'hydrogène
ii) un radical de formule

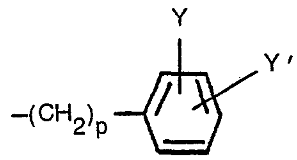

dans laquelle
p est 0, 1 ou 2, et
Y est l'hydrogène, le fluor, le chlore, le brome ou l'iode, ou $(C_{1-4})$alkyle ou alcoxy,
Y' est l'hydrogène, le fluor ou le chlore ou $(C_{1-3})$alkyle ou alcoxy, ou
iii) $(C_{1-8})$alkyle,

ou bien R est
b) un radical indolyle de formule

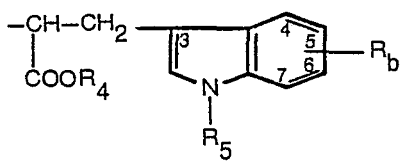

dans laquelle
$R_b$ est tel que défini sous a)
$R_4$ est $(C_{1-8})$alkyle ou benzyle non substitué, et
$R_5$ est l'hydrogène, $(C_{1-8})$alkyle ou benzyle non substitué,

ou bien R est
c) un radical benzocycloalkyle de formule

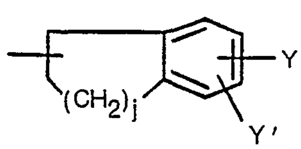

dans laquelle
Y et Y' sont tels que définis sous a) et
j est de 1 à 4,

ensemble avec un diluant ou véhicule pharmaceutiquement acceptable.